## Europäisches Patentamt

## European Patent Office

## Office européen des brevets

(11) Veröffentlichungsnummer: **0 150 393**
**B1**

(12) # EUROPÄISCHE PATENTSCHRIFT

(45) Veröffentlichungstag der Patentschrift:
05.11.86

(51) Int. Cl.⁴: **G 11 B 5/71**

(21) Anmeldenummer: **84115408.1**

(22) Anmeldetag: **14.12.84**

(54) **Magnetische Aufzeichnungsträger.**

(30) Priorität: **30.12.83 DE 3347532**

(43) Veröffentlichungstag der Anmeldung:
**07.08.85 Patentblatt 85/32**

(45) Bekanntmachung des Hinweises auf die Patenterteilung:
**05.11.86 Patentblatt 86/45**

(84) Benannte Vertragsstaaten:
**DE FR GB NL**

(56) Entgegenhaltungen:
**DE-A-3 008 021**
**DE-C-1 794 429**
**GB-A-2 032 428**
**GB-A-2 039 281**

(73) Patentinhaber: **BASF Aktiengesellschaft, Carl-Bosch- Strasse 38, D-6700 Ludwigshafen (DE)**

(72) Erfinder: **Lehner, August, Dipl.- Ing., Wachenheimer Strasse 4, D-6701 Roedersheim-Gronau (DE)**
Erfinder: **Kohl, Albert, Graf- Schoenborn- Strasse 14, D-6716 Dirmstein (DE)**
Erfinder: **Balz, Werner, Dr. Chem., Kropsburgstrasse 44, D-6703 Limburgerhof (DE)**
Erfinder: **Sommermann, Friedrich, Dr. Chem., Grimmelshausenstrasse 9, D-7640 Kehl (DE)**
Erfinder: **Velic, Milan, Dr. Dipl.- Ing., Rembrandtstrasse 1, D-6700 Ludwigshafen (DE)**
Erfinder: **Grau, Werner, Dr. Chem., Tuchbleiche 5, D-6712 Bobenheim- Roxheim (DE)**
Erfinder: **Baur, Reinhold, Dr. Phys., Eschbachstrasse 1, D-7601 Ortenberg (DE)**

**Beschreibung**

Die Erfindung betrifft magnetische Aufzeichnungsträger, bestehend aus einem nichtmagnetischen Trägermaterial und mindestens einer darauf haftfest aufgebrachten magnetisierbaren Schicht auf der Basis von in einem Polymerbindemittel, einem Oleitmittel und weiteren üblichen Zusatzstoffen feinverteilten magnetischen Material.

Bei der Aufnahme und Wiedergabe von Signalen mittels magnetischer Aufzeichnungsträger, welche im Kontakt über den Magnetkopf geführt werden und zudem noch über Umlenkrollen, -bolzen oder andere Führungselemente bewegt werden, treten je nach Ausbildung der Schicht unter Umständen sehr hohe Reibungskräfte und häufig auch das sogenannte Rückgleiten oder Stick-Slip-Effekt auf. Außerdem stellt der Abrieb bei der Benutzung solcher Aufzeichnungsträger nicht nur hinsichtlich der Lebensdauer sondern auch bezüglich der Betriebssicherheit ein Problem dar. Es ist daher üblich, den Schichtzusammensetzungen von magnetischen Aufzeichnungsträgern Oleitmittel zuzusetzen. Als geeignete Gleitmittel sind für diesen Zweck bereits eine große Anzahl verschiedener Gleitmittel, wie Polydimethylailoxane, Paraffinöle, Wachse, gesättigte und ungesättigte Fettsäuren, Fettsäureester, Fettsäureamide, Salze von Fettsäuren, ferner feste Schmierstoffe, wie Molybdänaulfid, Graphit, Polyteträsäthylenpulver und Polytrichlorflouräthylenpulver beschrieben. Auch wird angegeben, daß flüssige bzw. pastenförmige Gleitmittel gegenüber den festen Gleitmitteln den Vorteil besitzen, die zu schmierende Oberflächen mit einem homogenen dünnen Oberflächenfilm zu bedecken, wobei die mengenmäßige Zugabe an Gleitmittel sehr gering gehalten werden muß, da sonst die Oberfläche leicht klebrig wird. Diese flüssigen Gleitmittel können jedoch häufig nicht als alleiniges Gleitmittel werwendet werden und werden deshalb mit festen oder pastenförmigen Gleitmitteln kombiniert. Bei ausschließlicher Verwendung von flüssigen Gleitmitteln lassen sich bei vielen Anwendungsgebieten, insbesondere bei längerer Benetzungsdauer und ungünstigen Klimabedingungen weder das Sticken noch das Blocken und Verkleben der Bänder dauerhaft vermeiden. Beim Zusatz von Schmierstoffen in Form feinverteilter, unlöslicher hydrophober Feststoffe oder wachsartigen Stoffen, ist die Schmierwirkung nicht einheitlich, sondern die Feststoffpartikel befinden sich schon kurz nach der Herstellung nur an begrenzten Stellen an der Oberfläche sowie im Inneren der Magnetschicht. Besonders schwierig wird dies bei ihrer Verwendung in wäßrigen Bindemittelsystemen, da sich hier die Gleitmittel nur schwierig gleichmäßig einarbeiten lassen. Diese hydrophoben Gleitmittel ziehen besonders im wäßrigen Medium aber such in Lösungsmitteln schlecht oder nicht auf das meist hydrophile magnetische Material auf und schwitzen besonders bei ungünstigen Klimabedingungen, wie hohe Temperatur und hohe Luftfeuchtigkeit, leicht aus. Dadurch kommt es zu Ablagerungen an allen bandberührenden Teilen, besonders am Kopf, wodurch Pegeleinbrüche verursacht werden.

Es war daher Aufgabe der Erfindung, magnetische Aufzeichnungsträger, bestehend aus einem nichtmagnetischen Trägermatial und mindestens einer darauf haftfest aufgebrachten magnetisierbaren Schicht auf der Basis von in einem Polymerbindemittel, einem Gleitmittel und weiteren üblichen Zusatzstoffen feinverteilten magnetischen Material bereitzustellen, welche sowohl eine verbesserte Verschleißfestigkeit und werminderte Reibungswerte auch unter ungünstigen klimatischen Bedingungen aufweisen, als auch nicht das nachteilige Blockieren beim Betrieb der Aufzeichnungsträger sowie das Ausschwitzen von Gleitmittel zeigen.

Es wurde nun gefunden, daß sich die gestellte Aufgabe in einfacher Weise lösen läßt, wenn die magnetisierbare Schicht des magnetischen Aufzeichnungsträgers als Gleitmittel hydrophiliertes Zinkstearat in einer Menge von 0,1 bis 4 Gew.-%, bezogen auf das magnetische Material enthält.

Der Zusatz des hydrophilierten Zinkstearats als Gleitmittel bei den erfindungsgemäßen magnetischen Aufzeichnungsträgern ist sowohl bei wäßrigen wie auch bei lösungsmittelhaltigen Bindemittelsystemen vorteilhaft. Es verbessert zudem die Verträglichkeit mit dem magnetischen Material und läßt sich auch in Wasser sehr leicht eindispergieren. Im Falle von lösungsmittelhaltigen Systemen ist es für eine gute Benetzung des magnetischen Materials günstig, wenn dieses 0,3 bis 2 Gew.-% Wasser gebunden enthält.

Bei speziellen Anwendungen der magnetischen Aufzeichnungsträger hat es sich zu ihrer weiteren Verbesserung und vor allem zu deren Optimierung als zweckmäßig erwiesen, das hydrophilierte Zinkstearat mit anderen Gleitmitteln zu kombinieren.

Das bei den erfindungsgemäßen magnetischen Aufzeichnungsträgern als Bindemittel eingesetzte hydrophilierte Zinkstearat enthält 3 bis 30, insbesondere 4 bis 12 % einer hydrophilen Komponente. Das Hydrophilierungsmittel weist eine Alkylkette und eine hydrophile Gruppe auf. Hierzu sind geeignet:

1. Alkylbenzolsulfonate mit einer Alkylkette von $G_6$ bis $C_{25}$, insbesondere von $C_{14}$ bis $C_{20}$.

2. Äthylenoxide eines Fettalkohols von $C_{12}$ bis $C_{25}$, bevorzugt $C_{14}$ bis $C_{20}$, mit 2 bis 20 Äthylenoxidgruppen.

3. Amin- bzw. Aminoalkoholalkylsulfonate mit einer Alkylkette von $C_{15}$ bis $C_{25}$.

4. Alkylbetaine mit einer Alkylkette von $C_{14}$ bis $C_{20}$.

5. Mono-, Di- oder-Triester der Phosphorsäure mit Monoalkoholen mit $C_{12}$ bis $C_{25}$.

Bevorzugt sind Produkte, die eine Alkylkette

von C$_{18}$ enthalten. Insbesondere geeignet ist das Alkylbenzolsulfonat mit einer Alkylkette von C$_{18}$.

Die in die erfindungsgemäßen magnetischen Aufzeichnungsträger eingearbeitete Menge des hydrophilierten Zinkstearats beträgt 0,1 bis 4, bevorzugt jedoch 0,3 bis 2,5 Gew.-%, bezogen auf das magnetische Material. Im Rahmen der Erfindung hat es sich als günstig erwiesen, wenn das hydrophilierte Zinkstearat bis zu 5 Gew.-% eines Elektrolyten, wie z.B. NaCl oder Na$_2$SO$_4$, enthält.

Der Aufbau der erfindungsgemäßen magnetischen Aufzeichnungsträger erfolgt ansonsten in an sich bekannter Weise. Als Bindemittel für die Dispersion des magnetischen Materials werden die hierfür üblichen bekannten organischen Polymeren eingesetzt. Sie sind u.a. in den DE-A 25 13 422, 32 27 161, 32 27 163, 32 27 164, der DE-B- 21 75 685, den DE-C- 2 442 762, 2 753 694 sowie den US-A- 4 310 565 und 4 328 282.

Als Lösungsmittel werden vorzugsweise Wasser, cyclische Ether, wie Tetrahydrofuran und Dioxan, und cyclische Ketone, wie Cyclohexanon, verwendet. Auch können je nach Anwendungsgebiet im Falle des Einsatzes von Polyurethanen als Bindemittel endere stark polare Lösungsmittel, wie Dimethylformamid, N-Methylpyrrolidon, Dimethylsulfoxid oder Ethylglykolacetat herangezogen werden. Ebenso ist es möglich, die genannten Lösungsmittel mit Aromaten, wie Toluol oder Xylol und Estern, wie Ethyl- oder Butylacetat, zu mischen.

Als magnetische Materialien werden bevorzugt feinteiliges stäbchenförmiges Gamma-Eisen(III)oxid mit einer durchschnittlichen Teilchengröße von 0,1 bis 2 µm und insbesondere von 0,1 bis 0,9 µm oder stäbchenförmiges Chromdioxid der gleichen Teilchenstruktur, wie beim Eisenoxide angegeben, verwendet. Weitere geeignete Materialien sind Gamma-Eisen(III)oxid mit Dotierungen von Schwermetallen, insbesondere von Kobalt sowie feinteilige Metallegierungen von Eisen, Kobalt und/oder Nickel.

Den Dispersionen können weitere Zusatzstoffe zur Verbesserung der Magnetschicht zugesetzt werden. Beispiel solcher Zusätze sind Fettsäuren, Polycarbonsäuren, Mono-, Di- oder Polysulfonsäuren bzw. Phosphorsäuren, deren Gemische, Ester sowie Wachse, Lecithine, Siliconöle, Fluorcarbone, außerdem Füllstoffe wie Ruß, Graphit, Quarzmehl und/oder nichtmagnetisierbares Pulver auf Silicatbasis. Im allgemeinen liegen solche Zusätze insgesamt unter 10 Gew.-%, bezogen auf die Magnetschicht.

Eine gegebenenfalls, je nach Bindemittelsystem und Bandeigenschaftsprofil, erforderliche Vernetzung der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylpropan und Diethylenglykol. Die Polyisocyanatmenge kann dabei je nach Bindemittelsystem sehr unterschiedlich sein.

Während beim üblichen Vernetzen von Bindemittelsystemen mit Polyisocyanaten die Anwesenheit selbst von geringen Mengen an Wasser wegen seiner Reaktion mit dem Isocyanat nachteilig ist, ist es im Falle der erfindungsgemäßen Aufzeichnungsträger von Vorteil für die Pigmentbenetzung, wenn das magnetische Material 0,3 bis 2 Gew.-% Wasser enthält. Im Gegensatz zu der erwarteten Reaktion bedingen die Anwesenheit des hydrophilierten Zinkstearats und bei dem magnetischen Material anhaftenden Spuren von Wasser eine gleichmäßigere Vernetzungsreaktion gegenüber derjenigen bei an sich bekannten Magnetschichtzusammensetzungen.

Die Herstellung der erfindungsgemäßen magnetischen Aufzeichnungsträger geschieht in üblicher Weise. Hierzu wird das magnetische Material mit dem verwendeten Bindemittel und ausreichend Lösungsmittel in einer Dispergiermaschine, z.B. einer Topfkugelmühle oder einer Rührwerkskugelmühle, unter Zusatz von gegebenenfalls weiteren Zusatzstoffen dispergiert. Zur Einstellung des zweckmäßigen Bindemittel-Pigment-Verhältnisses können diese der Mischung entweder in festem Zustand oder in Form von 10 bis 60 %igen Lösungen bzw. 20 bis 60 %igen Dispersionen zugegeben werden. Es hat sich als zweckmäßig erwiesen, die Dispergierung solange fortzuführen, bis eine extreme feine Verteilung des magnetischen Materials erreicht ist, was 1 bis 7 Tage erfordern kann. Durch anschließendes wiederholtes Filtrieren erhält man eine völlig homogene Magnetdispersion. Gegebenenfalls erforderliche Vernetzungsmittel werden vor der Beschichtung zur Dispersion gegeben.

Die Magnetdispersion wird nun mit Hilfe üblicher Beschichtungsmaschinen, z.B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 Vm und insbesondere von 6 bis 36 µm. Bevor die noch flüssige Beschichtungsmischung auf dem Träger getrocknet wird, was zweckmäßigerweise bei Temperaturen von 50 bis 90° C geschieht, werden die anisotropen Magnetteilchen gegebenenfalls durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 40 bis 100°C, vorzugsweise 60 bis 80°C, geglättet und verdichtet werden. Die Dicke der Magnetschicht beträgt im allgemeinen 3 bis 20 μm, vorzugsweise 4 bis 15 μm.

Die erfindungsgemäßen magnetischen Aufzeichnungsträger zeichnen sich gegenüber denen nach dem Stand der Technik durch eine verbesserte Verschleißfestigkeit und Tropenfestigkeit aus. Die Reibungswerte nehmen ab, Pegeleinbrüche werden vermieden und das Blocken der Bänder wird verhindert.

Die Erfindung wird anhand der folgenden Beispiele näher erläutert und die Vorteile gegenüber dem Stand der Technik (Vergleichsversuche) aufgezeigt. Die in den Beispielen genannten Teile und Prozente sind, soweit nicht anders angegeben, Gewichtseinheiten.

Die resultierenden magnetischen Aufzeichnungsträger wurden folgenden Tests unterzogen:

## Test 1

Reibungskoeffizient Schicht/Stahl, vor/nach Dauerlauf
Die Bestimmung der Reibungszahlen erfolgt nach DIN 45 522, Blatt 1. Die Reibungskoeffizienten werden am unbenutzten Band und am durch Dauerlauf benutzten Band gemessen.

## Test 2

Quasistatische Reibung
Die Reibungszahl wird durch Messen einer Zugkraft bestimmt, die ein über eine feststehende Meßtrommel geführtes Magnetband durch Reibung erzeugt. Die Meßtrommel ist eine Stahltrommel mit einer Oberflächenrauhigkeit von ca. 0,15 μm und einem Durchmesser von 70 mm. Das Bandstück ist 25 cm lang und wird bei einem Bandzug von 20 cN mit einer Geschwindigkeit von 1 mm/s und einem Umschlingungswinkel von 180° über die Trommel geführt. Der Zugan der Meßdose F ist ein Maß für die Reibungszahl μ und zwar nach

$$\mu = \frac{1}{\pi} \cdot \ln\frac{F}{20}$$

(Prüfklima: 23°C, 50 %, rel. Feuchte).

## Test 3

Dynamische Reibung
Die Reibungszahl wird entsprechend Test 2 durchgeführt, jedoch wird das Magnetband über eine sich mit einer Umfangsgeschwindigkeit von 9,5 cm/s drehenden Meßtrommel geführt.

## Test 4

Ablagerungstest
Auf einem Recorder werden jeweils 4 mit dem Magnetband gefüllte Kassetten bei 30°C und 93 % rel. Feuchte 20 Stunden lang auf Wiedergabe betrieben. Danach werden die Ablagerungen auf dem Löschkopf, dem Tonkopf und auf der Tonwelle visuell bewertet. Die Stärke der Ablagerungen werden in einer Notenskala (von Note l: keine Ablagerung bis Note 6: sehr starke Ablagerung) festgehalten und der Mittelwert gebildet.

## Test 5

Pegelkonstanz
Es wird die Anzahl der Durchläufe bestimmt, bis ein Pegeleinbruch größer 2 dB auftritt.

## Test 6

Ausschwitzen
Es werden jeweils 10 cm lange Abschnitte eines Magnetbandes flach auf eine Glasplatte gelegt und 7 Tage bei 50°C im Trockenschrank gelagert. Damach wird der auf der Magnetschichtoberfläche feststellbare Belag bestimmt.

## Test 7

IND-Test
10 mit dem Magnetband gefüllte Kassetten werden 4 Wochen bei 40°C und 93 % rel. Feuchte gelagert und anschließend bei 30°C und 93 % rel. Feuchte im Wiedergabebetrieb gefahren. Die Beurteilung der Ablagerungen erfolgt wie in Test 4.

## Test 8

Duplicator-Test
Die Klimabedingung bei Lagerung und Betrieb von jeweils 10 Kassetten entsprechend denen des Tests 7. Danach wird jede Kassette bei 8facher Geschwindigkeit (38 cm/s) einem Durchlauf unterzogen. Zur Auswertung werden die registrierten Bandlaufstörungen und Blockierer herangezogen und der prozentuale Anteil der ausgefallenen Kassetten als Meßwert angegeben.

**Beispiel 1**

In einer Stahlkugelmühle von 6000 Volumenteilen Inhalt und einer Kugelfüllung von 8000 g wurden 1200 Teile eines magnetischen Eisenoxids mit einer Koerzitivfeldstärke von 26 kA/m und einer spezifischen Oberfläche von 20 m$^3$/g, 96 Teilen einer 25 %igen Lösung eines Copolymerisats auf Basis Methylpolyglykolacrylat/Methacrylsäure, 12 Teilen eines handelsüblichen Siliconöls und 12 Teilen des hydrophilierten Zinkstearates (Zinkstearat mit 6 % Stearylbenzolsulfonat und 4 % Natriumsulfat) mit 840 Teilen Wasser 24 Stunden dispergiert. In diesem Ansatz wurden anschließend 750 Teil einer 40 %igen Polyurethanionomerdispersion, gemäß Beispiel 1 der DE-A- 25 13 422, eingearbeitet.

Mit dieser Magnetdispersion wurde nach dem Filtrieren mit einem Linealgießer eine Polyethylenterephthalatfolie von 12 Vm Dicke beschichtet. Vor der Trocknung bei 70 bis 90°C wurde die beschichtete Folie zur Ausrichtung der magnetischen Teilchen in der Schicht durch ein homogenes Magnetfeld geführt und danach erfolgte noch eine Glättung und Verdichtung der Schicht durch Kalandrieren bei 70°C. Die Dicke der getrockneten Schicht betrug 4,7 µm. Die so beschichtete Folie wurde in Bändern von 3,81 mm Breite geschnitten und damit handelsübliche Kassetten bestückt. Die Prüfergebnisse sind inTabelle 1 angegeben.

**Beispiel 2**

Es wurde wie in Beispiel 1 beschrieben verfahren, jedoch wurde als Bindemittel anstelle des dort genannten Copolymerisats eine wäßrige Polyurethanionomerdispersion gemäß Beispiel 1 der US-A 4 310 565 eingesetzt. Die Prüfergebnisse sind in Tabelle 1 angegeben.

**Vergleichsversuch 1**

Es wurde wie in Beispiel 1 beschrieben verfahren, jedoch wurde anstelle des hydrophilierten Zinkstearates reines Zinkstearat eingesetzt. Die Prüfergebnisse sind in Tabelle 1 angegeben.

**Vergleichsversuch 2**

Es wurde wie in Beispiel 2 beschrieben verfahren, jedoch wurde anstelle des hydrophilierten Zinkstearats reines Zinkstearat eingesetzt. Die Prüfergebnisse sind in Tabelle 1 angegeben.

**Tabelle 1**

|  | Beispiel 1 | Beispiel 2 | Vergl. Vers. 1 | Vergl. Vers. 2 |
|---|---|---|---|---|
| Test 1 vor Dauerl. | 0,30 | 0,31 | 0,56 | 0,51 |
| Test 1 nach   " | 0,30 | 0,33 | 0,57 | 0,55 |
| Test 2 | 0,17 | 0,20 | 0,32 | 0,30 |
| Test 3 | 0,26 | 0,27 | 0,54 | 0,52 |
| Test 4 | 1,3 | 1,3 | 3,4 | 3,7 |
| Test 5 | 100 | 100 | 16 | 21 |
| Test 6 | nein | nein | ja | ja |

**Beispiel 3**

In eine Stahlkugelmühle mit einem Inhalt von 600 Volumenteilen wurden 600 Teile Stahlkugeln mit einem Durchmesser zwischen 4 und 6 mm, 102 Teile Tetrahydrofuran, 31 Teile einer 50 %igen Lösung der Polyharnstoffurethane gemäß Beispiel D der DE-A 32 27 164, 100 Teile eines ferromagnetischen Chromdioxids mit einer mittleren Nadellänge von 0,5 µm, 2,0 Teile hydrophiliertes Zinkstearat (gemäß Beispiel I), 0,25 Teile eines handelsüblichen Siliconöls sowie 0,5 Teile Methylstearat, 0,5 Teile Isostearinsäure und 5 Teile Zinkoxid eingefüllt und 36 Stunden dispergiert. Die Dispersion wurde dann unter Druck filtriert und unmittelbar vor dem Auftragen auf eine 15 µm dicke Polyethylenterephthalatfolie unter Rühren mit, bezogen auf ein Teil Dispersion, 0,028 Teilen einer 75 %igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80°C getrocknet und durch Hindurchführen zwischen beheizten Walzen unter Druck (60°C, Liniendruck 200 kg/cm) geglättet.

Die Messung der magnetischen Eigenschaften wurde in einem Meßfeld von 160 kA/m durchgeführt: die remanente Magnetisierung betrug 178 mT und die Ausrichtung der magnetischen Teilchen, d.h. das Verhältnis der remanenten Magnetisierung längs zu quer, 3,0. Nach dem Schneiden von 3,81 mm breiten Bändern wurden diese geprüft. Die Ergebnisse sind in Tabelle 2 angegeben.

## Vergleichsversuch 3

Es wurde wie in Beispiel 3 beschrieben verfahren, jedoch wurde anstelle des hydrophilierten Zinkstearats reines Zinkstearat eingesetzt. Die Prüfergebnisse sind in Tabelle 2 angegeben.

## Vergleichsversuch 4

Es wurde wie in Beispiel 3 beschrieben verfahren, jedoch wurde anstelle des hydrophilierten Zinkstearats reines Zinkoleat eingesetzt. Die Prüfergebnisse sind in Tabelle 2 angegeben.

## Tabelle 2

|  | Beispiel 3 | Vergl. Vers. 3 | Vergl. Vers. 4 |
|---|---|---|---|
| Test 7 | 1,4 | 1,7 | Bänder blockieren |
| Test 8 | 0 | 0 | 100 |
| Test 4 | 1,4 | 3,0 | 1,4 |
| Test 5 | 100 | 30 | 100 |
| Test 6 | nein | ja | nein |

## Patentansprüche

1. Magnetische Aufzeichnungsträger, bestehend aus einem nichtmagnetischen Trägermaterial und einer darauf haftfest aufgebrachten magnetisierbaren Schicht auf der Basis von in einem Polymerbindemittel und üblichen Zusatzstoffen feinverteilten magnetischen Materlal, dadurch gekennzeichnet, daß die magnetisierbare Schicht als Gleitmittel hydrophiliertes Zinkstearat in einer Menge von 0,1 bis 4 Gew.-%, bezogen auf das magnetische Material, enthält.

2. Magnetische Aufzeichnungsträger gemäß Anspruch 1, dadurch gekennzeichnet, daß die magnetisierbare Schicht als Gleitmittel hydrophiliertes Zinkstearat in einer Menge von 0,1 bis 4 Gew.-%, bezogen auf das magnetische Material, mit bis zu 5 Gew.-% eines Elektrolyten enthält.

## Claims

1. A magnetic recording medium which consists of a non-magnetic base and, applied thereto, a firmly adhering magnetizable layer based on magnetic material finely dispersed in a polymeric binder, and conventional additives, wherein the magnetizable layer contains, as lubricant, from 0.1 to 4% by weight, based on the magnetic material, of zinc stearate which has been rendered hydrophilic.

2. A magnetic recording medium as claimed in claim 1, wherein the magnetizable layer contains, as lubricant, from 0.1 to 4% by weight, based on the magnetic material, of zinc stearate which has been rendered hydrophilic and which contains up to 5% by weight of an electrolyte.

## Revendications

1. Support d'enregistrement magnétique, constitué d'un matériau support non magnétique et d'une couche magnétisable fixée dessus de manière adhérente, à base d'un matériau magnétique finement réparti dans un liant polymère et des additifs usuels, caractérisé par le fait que la couche magnétisable contient, en tant que lubrifiant, du stéarate de zinc hydrophilisé en une quantité de 0,1 à 4 % en poids, rapporté au matériau magnétique.

2. Support d'enregistrement magnétique selon la revendication 1, caractérisé par le fait que la couche magnétisable contient, en tant que lubrifiant, du stéarate de zinc hydrophilisé en une quantité de 0,1 à 4 % en poids, rapporté au matériau magnétique avec jusqu'à 5 % en poids d'un électrolyte.